# EUROPÄISCHE PATENTANMELDUNG

(11) **EP 2 617 339 A2**
(43) Veröffentlichungstag der Anmeldung: **24.07.2013**
(21) Anmeldenummer: 12401255.0
(22) Anmeldetag: 20.12.2012
(51) Int. Cl.: A47L 9/14, B01D 39/16

(54) **Mehrlagiges Filtermaterial für einen Staubsaugerbeutel**

(30) Priorität: 19.01.2012 DE 102012100431
(71) Anmelder: Miele & Cie. KG, 33332 Gütersloh (DE)
(72) Erfinder: Kreimeyer, Stefan, 33729 Bielefeld (DE); Siefert, Wolfgang, 33719 Bielefeld (DE); Steinkötter, Heinz-Günter, 33739 Bielefeld (DE); Zierke, Wolfgang, 33699 Bielefeld (DE)

(57) **Zusammenfassung**

Die Erfindung betrifft ein mehrlagiges Filtermaterial für einen Staubsaugerbeutel, welches stromaufwärts geordnet wenigstens folgende Schichten umfasst
eine Vorabscheideschicht (1),
eine Staubspeicherschicht (2),
eine Schicht (3) zur Erhöhung der Reißfestigkeit des Staubbeutels.

Um ein Filtermaterial für einen Staubsaugerbeutel zu offenbaren, welches einerseits einfach und auch preiswert herzustellen ist und andererseits eine ausreichende Reißfestigkeit gewährleistet, wird vorgeschlagen, dass die Schicht (3) zur Erhöhung der Reißfestigkeit des Staubbeutels zwei Lagen Spinnvlies (3.1, 3.2) umfasst, die linienförmig miteinander verbunden sind

## Beschreibung

Die Erfindung betrifft ein mehrlagiges Filtermaterial für einen Staubsaugerbeutel. Ein solches Material besitzt einen Schichtaufbau, der wenigstens aus einer Vorabscheideschicht, einer Staubspeicherschicht und einer Schicht zur Erhöhung der Reißfestigkeit des Staubbeutels besteht.

Bei Staubsaugerbeuteln besteht das Bestreben, deren Abscheideleistung und auch deren Standzeit zu erhöhen. Aus diesem Grund kommt mehrlagiges Filtermaterial zum Einsatz, wobei die einzelnen Lagen unterschiedliche Aufgaben erfüllen. Neben Lagen, welche den in der eingesaugten Luft enthaltenen Staub oder Schmutz aufsaugen sollen, kommt mindestens eine Lage zum Einsatz, welche den Staubbeutel vor einem Zerreißen schützen soll. Insbesondere ein Riss in einem mit Staub gefüllten Beutel führt wenigstens zu einer für den Benutzer unangenehmen Verschmutzung des Staubsaugers, kann aber auch seine Zerstörung zur Folge haben.

Aus der EP 2 011 556 A1 ist es bekannt, bei einem Staubsaugerbeutel zur Erhöhung der Reißfestigkeit sowohl innen als auch außen ein extrudiertes Netz oder ein gewebtes Netz vorzusehen.

Auch die Verwendung von porösen oder perforierten Folien aus Kunststoff ist bekannt, siehe DE 74 24 655 U oder EP 1 795 248 A2.

Es ist auch bekannt die Festigkeit eines Staubbeutels durch punktuelles Verschweißen einzelner und/oder aller Lagen zu erhöhen.

Der Erfindung stellt sich das Problem, ein Filtermaterial für einen Staubsaugerbeutel der eingangs genannten Art zu offenbaren, welches einerseits einfach und auch preiswert herzustellen ist und andererseits eine ausreichende Reißfestigkeit gewährleistet.

Erfindungsgemäß wird dieses Problem durch ein Filtermaterial mit den Merkmalen des Patentanspruchs 1 gelöst. Vorteilhafte Ausgestaltungen und Weiterbildungen der Erfindung ergeben sich aus den nachfolgenden Unteransprüchen.

Dadurch, dass die Schicht zur Erhöhung der Reißfestigkeit des Staubbeutels zwei Lagen Spinnvlies umfasst, die linienförmig miteinander verbunden sind, wird eine erhöhte Festigkeit der äußeren Schicht erreicht. Hierzu wird ein Material verwendet, welches auch zur Abscheidung geeignet sein kann. Es müssen also keine zusätzlichen Materialien verwendet werden, welche die Herstellung verteuern.

Die Verbindung der Spinnvlieslagen kann thermisch oder mechanisch (durch Ultraschall) erfolgen. Dadurch ist es möglich, das außenliegende Material erst nach dem Zusammenfügen der einzelnen Schichten in der genannten Art und Weise zu behandeln um so die Funktionalität der innenliegenden Schichten nicht zu beeinträchtigen.

Die Verbindungslinien können wenigstens abschnittsweise in Form eines wiederkehrenden Musters ausgebildet sein, insbesondere können die Verbindungslinien ein sich über die gesamte Fläche des Materials Muster ergeben. Hierdurch entsteht ein besonders reißfester Aufbau, welcher außerdem noch optisch ansprechend ist. Die Muster können zum Beispiel dreieckig, viereckig oder sechseckig ausgebildet sein.

In einer besonders vorteilhaften Ausführungsform kann die strömungsmäßig innere Spinnvlieslage der Schicht zur Erhöhung der Reißfestigkeit farbig ausgebildet sein. Farbhaltige Schichten können durch die Farbzugabe mit einer stärkeren Reißfestigkeit ausgestattet werden. Wenn dann noch die äußere Spinnvlieslage der Schicht zur Erhöhung der Reißfestigkeit weiß ausgebildet ist oder wenigstens eine hellere Farbe besitzt, wird erreicht, dass das innere Spinnvlies im Bereich der Verbindungslinien durchscheint. Hierdurch wird eine von außen sichtbare Netzstruktur erzeugt, die dem Benutzer die erhöhte Festigkeit auch optisch vermittelt.

Es ist auch vorteilhaft, wenn die Vorabscheideschicht wenigstens eine Spinnvlieslage umfasst. Insbesondere bei einer Verwendung von zwei Spinnvlieslagen als Vorabscheideschicht können diese in der vorbeschriebenen Weise miteinander verbunden werden. Es wird so auf der strömungsmäßigen Innenseite des Staubsaugerbeutels eine weitere reißfeste Schicht erzeugt, die den Beutel beispielsweise beim Aufsaugen von Nägeln oder anderen scharfkantigen Gegenständen schützt.

Die Staubspeicherschicht kann wenigstens eine Meltblown-Lage und vorzugsweise noch eine Faserlage zur Erhöhung der Staubspeicherfähigkeit umfassen.

In einer besonders vorteilhaften Ausführungsform können die Verbindungslinien mindestens abschnittsweise eine Gitterstruktur ausbilden. Hierdurch wird die Festigkeit des Materials erhöht.

Vorzugweise sollten die parallel zueinander verlaufenden Abschnitte von Verbindungslinien einen Abstand zueinander von mindestens 0,5 cm, vorzugsweise zwischen 1 und 3 cm, aufweisen. Dadurch wird eine weitere Erhöhung der Reißfestigkeit erreicht ohne dass die Durchströmung des Materials negativ beeinflusst wird.

Weiterhin vorteilhaft ist eine Ausführungsform bei der die Verbindungslinien mindestens eine Länge von 5 cm aufweisen, vorzugsweise durchgehend über die gesamte Fläche des Materials erstrecken. Mit den durchgehenden Verbindungslinien wird eine erhöhte Festigkeit der äußeren Schicht erreicht und die Reißfestigkeit weiter erhöht.

Ein Ausführungsbeispiel der Erfindung ist in den Zeichnungen rein schematisch dargestellt und wird nachfolgend näher beschrieben.

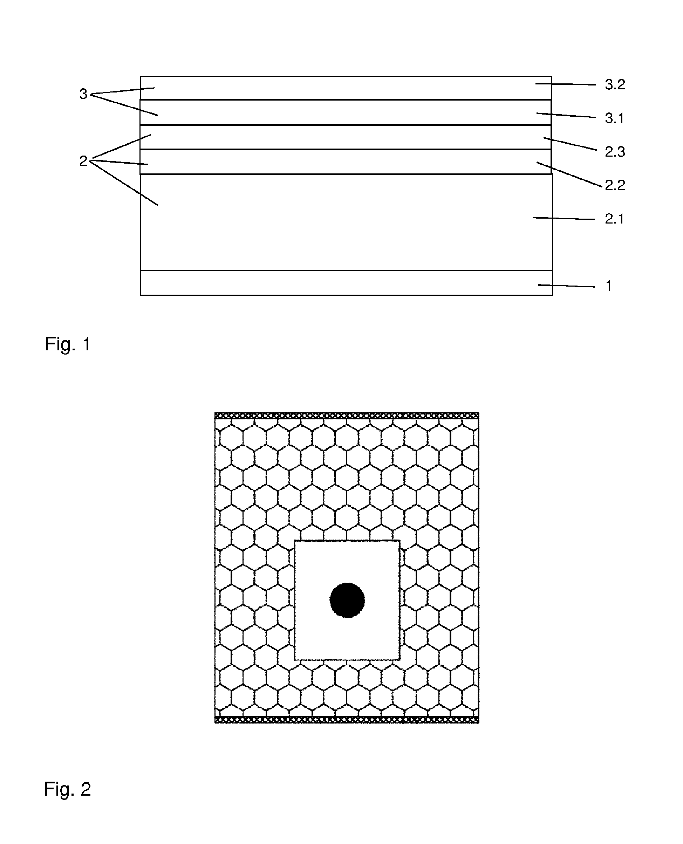

Die Figuren zeigen den Schichtaufbau eines Filtermaterials für einen Staubsaugerbeutel, wobei der Aufbau stromaufwärts von unten nach oben dargestellt ist (Figur 1) und die Ansicht eines Staubsaugerbeutels, welcher aus erfindungsgemäßem Filtermaterial hergestellt ist.

Das Material besitzt einen dreischichtigen Aufbau, wobei einzelne Schichten teilweise aus mehreren Lagen bestehen. Die strömungsmäßig innere Schicht wird durch ein handelsübliches Spinnvlies gebildet. Sie fungiert als Vorabscheiderschicht 1. Danach folgt eine Staubspeicherschicht 2, welche im gezeigten Ausführungsbeispiel aus einer Lage Faserstoff 2.1, diese kann z.B. aus Splitfibern, Airlaid, Polyesterkrempelvlies, etc. bestehen, einer Lage grobem Meltblown 2.2 und einer Lage feinem Meltblown 2.3 besteht. Abschließend ist eine Schicht 3 zur Erhöhung der Reißfestigkeit des Staubbeutels vorhanden. Diese umfasst zwei Lagen Spinnvlies 3.1 und 3.2, die linienförmig miteinander verbunden sind. Die Verbindung der Lagen kann thermisch durch Schweißen oder Zonenschmelzen oder mechanisch durch Ultraschall oder Pressen erfolgen. Dies kann bereits im Herstellprozess der Spinnvlies-Mutterrolle geschehen, so dass nicht das gesamte Material geprägt werden muss. Produktionstechnisch ist allerdings die Integration in die Beutelfertigung vorteilhafter. Auch hierbei ist die Verarbeitung nur in der äußeren Lage zu bevorzugen. Die beiden äußeren Lagen werden dann separat zugeführt und entsprechend per Ultraschall oder thermisch verbunden. Dabei erzeugen die Verbindungslinien das dargestellte wabenförmige Sechseckmuster, siehe Figur 2. Denkbar sind, natürlich sind auch andere Muster wie z.B. Dreiecke, Vierecke, etc. möglich. In Figur 2 ist außerdem zu sehen, dass die Verbindungslinien eine Gitterstruktur ausbilden. Weiterhin zu sehen ist in Figur 2, dass sich die Verbindungslinien durchgehend über die gesamte Fläche des Materials, das heißt über die gesamte Oberfläche des Staubbeutels, erstrecken. Im gezeigten, besonders vorteilhaften Beispiel wird zur Herstellung der strömungsmäßig inneren Lage der Schicht zur Erhöhung der Reißfestigkeit ein farbiges Spinnvlies, am besten aus einer dunklen Farbe (hier grau) verwendet. Die äußere Lage der Schicht zur Erhöhung der Reißfestigkeit ist dann aus einem hellen, vorzugsweise weißen Spinnvlies hergestellt. Auf diese Weise wird beim Verbinden der beiden Lagen erreicht, dass die innere durch die äußere hindurchscheint und eine (Netz-) Struktur erzeugt.

Der verwendete Begriff Spinnvlies bezeichnet einen Filamentspinnvliesstoff, der Begriff Meltblown einen schmelzgesponnenen Mikrofaservliesstoff. Dabei wird der Begriff Vliesstoff ("Nonwoven") gemäß der Definition nach ISO Standard ISO 9092 bzw. CEN Standard EN 29092 verwendet. Ein Vliesstoff kann insbesondere trocken- oder nassgelegt oder ein Extrusionsvliesstoff sein. Als Faserlage kann ein Airlaid, Splitfiber oder Polyesterkrempelvlies verwendet werden.

## Patentansprüche

1. Mehrlagiges Filtermaterial für einen Staubsaugerbeutel, welches stromaufwärts geordnet wenigstens folgende Schichten umfasst
eine Vorabscheideschicht (1),
eine Staubspeicherschicht (2),
eine Schicht (3) zur Erhöhung der Reißfestigkeit des Staubbeutels,
**dadurch gekennzeichnet,**
**dass** die Schicht (3) zur Erhöhung der Reißfestigkeit des Staubbeutels zwei Lagen Spinnvlies (3.1, 3.2) umfasst, die linienförmig miteinander verbunden sind.

2. Filtermaterial nach Anspruch 1,
**dadurch gekennzeichnet,**
**dass** die Verbindung der Spinnvlieslagen (3.1, 3.2) thermisch oder mechanisch erfolgt.

3. Filtermaterial nach Anspruch 1 oder 2,
**dadurch gekennzeichnet,**
**dass** die Verbindungslinien (10) wenigstens abschnittsweise in Form eines wiederkehrenden Musters ausgebildet sind.

4. Filtermaterial nach Anspruch 3,
**dadurch gekennzeichnet,**
**dass** die Verbindungslinien (10) ein sich über die gesamte Fläche des Materials erstreckendes Muster ergeben.

5. Filtermaterial nach Anspruch 4,
**dadurch gekennzeichnet,**
**dass** das Muster dreieckig, viereckig oder sechseckig ausgebildet ist.

6. Filtermaterial nach mindestens einem der vorhergehenden Ansprüche,
**dadurch gekennzeichnet,**
**dass** die strömungsmäßig innere Spinnvlieslage (3.1) der Schicht zur Erhöhung der Reißfestigkeit farbig ausgebildet ist.

7. Filtermaterial nach mindestens einem der vorhergehenden Ansprüche,
**dadurch gekennzeichnet,**
**dass** die strömungsmäßig äußere Spinnvlieslage (3.2) der Schicht zur Erhöhung der Reißfestigkeit weiß ausgebildet ist.

8. Filtermaterial nach mindestens einem der vorhergehenden Ansprüche,
**dadurch gekennzeichnet,**
**dass** die Vorabscheideschicht (1) wenigstens eine Spinnvlieslage umfasst.

9. Filtermaterial nach mindestens einem der vorhergehenden Ansprüche,
**dadurch gekennzeichnet,**
**dass** die Staubspeicherschicht (2) wenigstens eine Meltblown-Lage (2.2, 2.3) umfasst.

10. Filtermaterial nach Anspruch 9,
**dadurch gekennzeichnet,**
**dass** die Staubspeicherschicht (2) eine Faserlage (2.1) und wenigstens eine Meltblown-Lage (2.2, 2.3) umfasst.

11. Filtermaterial nach einem der vorhergehenden Ansprüche
**dadurch gekennzeichnet,**
**dass** die Verbindungslinien (10) mindestens abschnittsweise eine Gitterstruktur ausbilden.

12. Filtermaterial nach einem der vorhergehenden Ansprüche
**dadurch gekennzeichnet,**
**dass** parallel zueinander verlaufende Abschnitte von Verbindungslinien (10) einen Abstand zueinander von mindestens 0,5 cm, vorzugsweise zwischen 1 und 3 cm, aufweisen.

13. Filtermaterial nach einem der vorhergehenden Ansprüche
**dadurch gekennzeichnet,**
**dass** die Verbindungslinien (10) mindestens eine Länge von 5 cm aufweisen, vorzugsweise durchgehend über die gesamte Fläche des Materials erstrecken.
